Europäisches Patentamt

European Patent Office

Office européen des brevets

(11) Numéro de publication: **0 482 548 A1**

## DEMANDE DE BREVET EUROPEEN

(21) Numéro de dépôt: **91117914.1**

(22) Date de dépôt: **21.10.91**

(51) Int. Cl.⁵: **G06K 7/06**

(30) Priorité: **25.10.90 FR 9013245**

(43) Date de publication de la demande:
**29.04.92 Bulletin 92/18**

(84) Etats contractants désignés:
**BE CH DE ES FR GB IT LI NL**

(71) Demandeur: **ALCATEL CIT**
**12 Rue de la Baume**
**F-75008 Paris(FR)**

(72) Inventeur: **Pernet, Michel**
**8, Grande Rue**
**F-25300 Doubs(FR)**

(74) Mandataire: **Weinmiller, Jürgen et al**
**Lennéstrasse 9 Postfach 24**
**W-8133 Feldafing(DE)**

(54) **Cadre de contact pour lecteur de carte à puce.**

(57) L'invention concerne un cadre de contact pour lecteur de cadre à puce.

Ce cadre de contact comprend notamment un cadre en matière isolante, pourvu d'au moins deux fenêtres (8, 9) ainsi que des éléments de contact constitués de deux ensembles de lames, un ensemble dit avant (6) et un ensemble dit arrière (7).

Les lames de l'ensemble arrière (7) sont sur-moulées dans un barreau arrière délimitant la fenêtre arrière (9), leur extrémité formant broche de connexion (72) faisant saillie de ce barreau et en ce que les lames de l'ensemble avant (6) ont leur extrémité formant broche de connexion (62) faisant saillie à l'arrière du cadre à proximité des broches de connexion (72) de l'ensemble arrière (7).

FIG.3

La présente invention concerne un cadre de contact pour lecteur de carte à puce. On entend par carte à puce des cartes incluant au moins un composant électronique, avec lequel des connexions électriques doivent être établies, dans un lecteur équipant un appareil exploité au moyen de ce genre de carte. De tels équipements sont de plus en plus utilisés, par exemple dans les terminaux bancaires ou les taxiphones par exemple.

Un tel cadre de contact fait l'objet du brevet français n° 2 623 313.

Selon ce brevet, le cadre de contact comporte notamment des moyens de guidage de la carte ainsi que des éléments de contact qui assurent le raccordement électrique avec des plages conductrices de la carte à puce et par lesquels sont établis des circuits intéressant l'appareil incorporant le lecteur de carte à puce.

Un tel cadre comprend essentiellement une pièce en matière moulée isolante supportant les éléments de contact mis en place dans des fenêtres de raccordement par surmoulage dans des barreaux. Le cadre supporte deux séries d'éléments de contact disposés en vis-à-vis. Centralement par rapport au cadre, ces éléments sont profilés et font saillie au-dessous de la surface du plan du cadre. C'est au niveau de ces profils, que sont réalisées la pression sur le composant électronique de la carte à puce et en conséquence la connexion.

De chaque côté du cadre, les éléments de contact sortent frontalement des barreaux où ils sont surmoulés pour former les broches de connexion destinées à être reliées avec la plaque de circuit imprimé.

De façon générale un tel cadre est associé à un couvercle mis en place sous le cadre, couvercle et cadre formant le logement d'insertion de la carte à puce.

Cet ensemble cadre et couvercle est monté généralement sous la plaque de circuit imprimé. Les parties profilées des éléments de connexion sont donc dirigées vers le bas et les éléments de contact à leurs extrémités formant broches de connexion sont repliés vers le haut pour être soudés sur la carte de circuit imprimé.

Si l'on désigne par avant, le côté du cadre dirigé à proximité de la fente d'insertion de la carte à puce et par arrière, le côté du cadre opposé, une série de broches de connexion se trouve à l'avant du cadre et une autre série se trouve à l'arrière. De leur sortie du barreau du cadre à leur connexion dans ou sur la plaque de circuit imprimé, elles forment donc un coude où elles sont à nu, hors de la matière moulée isolante.

Un tel agencement pose plusieurs problèmes.

La plaque de circuit imprimé se trouvant en partie haute au-dessus du cadre de contact, la fente d'insertion dans le boîtier de l'appareil doit se situer à une distance du capot supérieur du boîtier qui est définie par l'encombrement de la plaque de circuit imprimé qui peut éventuellement supporter sur sa surface supérieure des composants volumineux. Or, pour des raisons ergonomiques, il est préférable de disposer la fente d'insertion le plus haut possible par rapport au boîtier de l'appareil afin de faciliter la manoeuvre de l'utilisateur et de ménager de la place dans le boîtier en-dessous du connecteur de carte à puce.

De plus la plaque de circuit imprimé peut devoir être reliée à un appareillage situé en-dessous du connecteur de carte à puce, cet appareillage pouvant être constitué d'un clavier par exemple. La présence du connecteur de carte à puce en-dessous de la plaque de circuit imprimé ne facilite pas cette éventuelle connexion.

En outre, comme il a été vu plus haut, l'agencement de l'art antérieur présente en partie avant une partie coudée des broches de connexion qui est à nu à proximité de la fente d'insertion. La présence de cette partie coudée avant présente plusieurs problèmes.

Lorsque les cartes à puce portent des charges électrostatiques, des décharges peuvent se produire, compte tenu de la faible distance entre la carte à puce et la partie coudée des broches de connexion avant. Ceci, à cause de l'électricité statique, peut provoquer des erreurs ou des détériorations dans le système de lecture.

Par ailleurs, la partie coudée des broches de connexion se trouvant à proximité de la fente d'insertion de la carte à puce, il est relativement facile de détériorer ces broches de connexion à l'aide d'un outil tel une lame de tournevis ou équivalent et cet agencement est donc relativement fragile si de tels actes de vandalisme sont réalisés.

En outre, il est également possible de connecter à ces parties de broches de connexion proches de la fente d'insertion des fils permettant de simuler le circuit de la carte à puce et ainsi d'utiliser de façon frauduleuse l'appareil.

La présente invention se propose de résoudre ces problèmes en fournissant un agencement de cadre de contact pour lecteur de carte à puce qui permette l'installation de la plaque de circuit imprimé en-dessous de l'ensemble cadre de contact et couvercle, tout en permettant l'introduction de la carte à puce de façon classique, à savoir avec sa zone de contact tournée vers le haut.

Le document de brevet européen EP-0213 041 déposé le 8 août 1986 divulgue un cadre de contact dont les lames ont leurs extrémités formant broches de connexion qui aboutissent du côté du cadre opposé aux extrémités de contact. Ces lames sont surmoulées dans des plaquettes qui sont emboîtées sur des tenons portés par le cadre support et sont bloquées par des têtes formées sur ces tenons, les plaquettes des deux ensembles de lames étant superposées.

Ce cadre présente de nombreux problèmes techniques qui notamment rendent sa réalisation particulièrement coûteuse.

Pour obtenir un tel cadre, un grand nombre de pièces sont à assembler et ces pièces sont toutes de petites dimensions et sont délicates à fabriquer et à assembler.

Le positionnement de la carte par rapport aux extrémités de contact doit être d'une grande précision pour obtenir une force correcte exercée sur la plage conductrice de la carte à puce pour éviter des problèmes de résistance de contact ou des problèmes d'usure des éléments de contact et des cartes. Or compte-tenu de l'empilage de plaquettes de ce cadre antérieur, les côtes sont additionnées et ceci implique la nécessité de tolérances très serrées sur chacune des pièces empilées.

Par ailleurs, il est nécessaire pour fabriquer ce cadre de réaliser deux types de lames différents, deux opérations de surmoulage et un assemblage minutieux avec le cadre support, qui lui-même doit être façonné.

Enfin, l'encombrement en épaisseur d'un tel cadre de contact est particulièrement important; or il est souhaitable de réduire le plus possible l'encombrement d'un lecteur de carte à puce, dans le but par exemple de réaliser des appareils portatifs.

La présente invention concerne un cadre de contact pour lecteur de carte à puce comprenant notamment un cadre en matière isolante pourvu d'au moins deux fenêtres, ainsi que des éléments de contact, ces éléments de contact étant constitués de deux ensembles de lames, un ensemble dit avant destiné à être disposé du côté de la fente d'insertion de la carte à puce et un ensemble dit arrière disposé de l'autre côté du cadre, les lames de chaque ensemble étant parallèles, profilées à l'une de leurs extrémités et faisant saillie vers le bas au-dessous de la surface du plan du cadre pour assurer le raccordement électrique avec des plages conductrices de la carte à puce, ces extrémités profilées de chaque ensemble étant disposées respectivement dans une fenêtre en vis-à-vis, l'autre extrémité des lames étant destinées à former des broches de connexion destinées à être reliées à une plaque de circuit imprimé associée au cadre, les lames de l'ensemble arrière étant surmoulées dans un barreau arrière délimitant la fenêtre arrière, leur extrémité formant broche de connexion faisant saillie de ce barreau, et les lames de l'ensemble avant étant surmoulées au moins dans un barreau avant délimitant la fenêtre avant, cadre remarquable en ce que les lames de l'ensemble avant ont leur extrémité formant broche de connexion faisant saillie à l'arrière du cadre en matière isolante dans une face latérale de celui-ci à proximité des broches de connexion de l'ensemble arrière, toutes les broches de connexion se trouvant sensiblement dans un même plan.

Un tel cadre peut être monté de façon classique, avec la plaque de circuit imprimé disposée au-dessus, ou selon le nouveau mode de montage, avec la plaque de circuit imprimé au-dessous.

Dans tous les cas de montage, sont supprimées les parties de lames à nu à proximité de la fente d'insertion de la carte à puce susceptibles d'être soumises à des actes de vandalisme ou à des raccords frauduleux. Tout problème de présence d'électricité statique est également évité à ce niveau du connecteur.

Grâce à ces caractéristiques, toutes les broches de connexion se trouvent du même côté du cadre de contact. Ce cadre peut donc être très aisément associé à une plaque de circuit imprimé disposé au-dessous de l'ensemble cadre de contact et couvercle.

Le cadre, selon l'invention, présente de plus une épaisseur totale minime, particulièrement adaptée aux diverses applications d'un lecteur de carte à puce.

Un mode de réalisation préféré consiste en ce que les lames de l'ensemble avant sont, vues perpendiculairement au plan du cadre, découpées selon une forme de $\Gamma$ dont la branche la plus courte constitue les parties profilées de raccordement électrique et dont la branche la plus longue est disposée parallèlement aux lames de l'ensemble arrière.

De préférence les broches de connexion de l'ensemble avant et de l'ensemble arrière sont repliées de façon identique vers le bas.

Cet agencement permet le montage du cadre avec une plaque de circuit imprimé disposée sous l'ensemble du cadre de contact et du couvercle.

Selon un mode de réalisation préféré, les lames de l'ensemble avant sont au moins surmoulées dans un barreau avant délimitant la fenêtre avant ; de préférence elles sont également surmoulées dans un barreau central séparant les fenêtres avant et arrière et dans un barreau arrière délimitant la fenêtre arrière.

Selon un agencement préféré, les lames de l'ensemble avant sont symétriques par rapport à un axe central traversant les deux fenêtres.

Ceci permet de réduire l'encombrement en largeur dans le barreau avant définissant la fenêtre avant, les lames de l'ensemble avant les plus à droite étant prolongées vers la droite et les lames les plus à gauche étant prolongées vers la gauche.

Afin de supprimer toute décharge électrique néfaste, à proximité de la fente d'insertion de la carte à puce, la carte peut comporter sur sa face avant un revêtement conducteur relié à la masse.

Selon un procédé de fabrication préféré et particulièrement avantageux, les ensembles de lames avant et arrière sont réalisés par découpage en une seule pièce dans une bande de métal.

Un tel procédé de fabrication ne nécessite qu'un seul découpage de toutes les lames ensemble et qu'un seul surmoulage des ensembles de lames pour réaliser le cadre de contact. Ainsi sont simplifiées à l'extrême les opérations de réglage et de positionnement. Cette fabrication est d'un coût particulièrement intéressant.

Les différents objets et caractéristiques de la présente invention seront maintenant exposés dans de plus amples détails dans la description qui va suivre, faite à titre d'exemple non limitatif, en se reportant aux figures annexées qui représentent :

- la figure 1 une vue en coupe de l'agencement d'un connecteur pour carte à puce de l'art antérieur, une carte à puce étant insérée dans le connecteur,
- la figure 2 une vue en coupe de l'agencement d'un connecteur pour carte à puce conforme à l'invention, une carte à puce étant insérée dans le connecteur,
- la figure 3 une vue de dessous d'un cadre de contact conforme à l'invention.

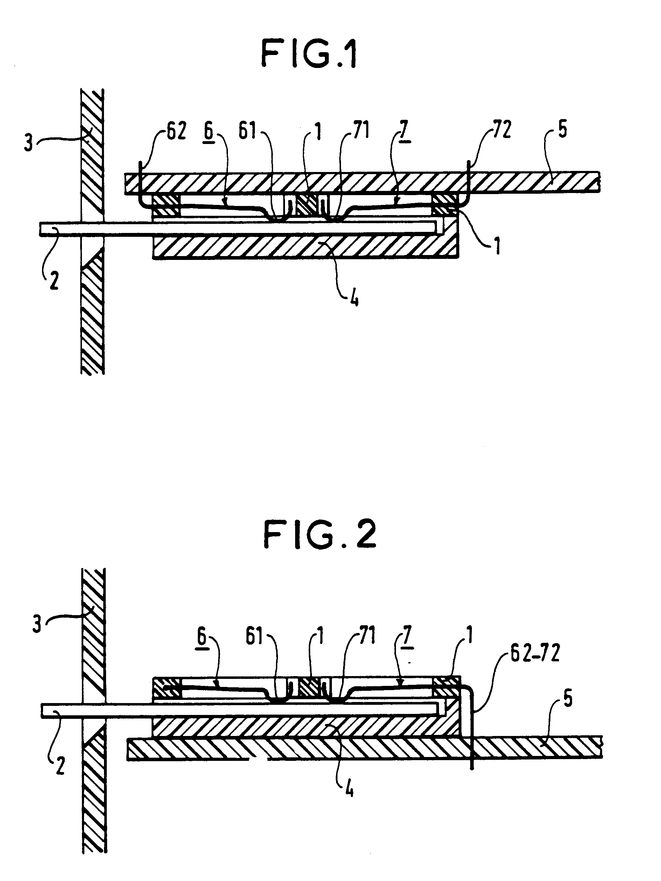

La figure 1 représente l'agencement d'un connecteur selon l'art antérieur. Dans cet agencement la plaque de circuit imprimé 5 est disposée en-dessus du connecteur constitué d'un cadre de contact 1 et d'un couvercle 4. La carte à puce 2 est insérée par la fente d'insertion 3 du boîtier de l'appareil, avec sa zone de contact disposée vers le haut et venant se raccorder avec les parties profilées 61, 71 des lames des ensembles de lames avant 6 et arrière 7. Ces lames sont surmoulées partiellement dans le cadre de contact 1 et se terminent par leur autre extrémité en des broches de connexion avant 62 et arrière 72.

Avec un tel agencement du cadre de contact, il est impossible de disposer la plaque de circuit imprimé en-dessous du connecteur, puisqu'il serait impossible de relier les broches de connexion avant 62 avec la plaque de circuit imprimé 5. De plus comme on le voit sur la figure, ces broches de connexion avant 62 ont une partie coudée qui se trouve à proximité de la fente d'insertion et est en conséquence susceptible d'être détériorée ou d'être manipulée de façon frauduleuse.

La présente invention résoud ses problèmes en permettant un agencement tel que décrit sur la figure 2.

Selon cet agencement, la disposition de l'ensemble carte de contact 1 et couvercle 2 n'est pas modifiée afin de permettre toujours l'insertion de la carte à puce 2 avec sa zone de contact disposée vers le haut.

Par contre la plaque de circuit imprimé 5 est disposée en-dessous de cet ensemble permettant ainsi un encombrement réduit dans la partie haute du connecteur.

Pour ce faire, l'invention propose un nouvel agencement du cadre de contact 1 qui sera décrit plus précisément plus loin.

Les parties profilées 61, 71 des ensembles de lames avant 6 et arrière 7 gardent la même disposition afin de permettre le raccordement à la zone de contact de la carte à puce.

Par contre les broches de connexion 62, 72 des deux ensembles de lames se trouvent à l'arrière du cadre 1 et font saillie dans la face latérale de celui-ci, toutes les broches de connexion 62, 72 se trouvant sensiblement dans un même plan.

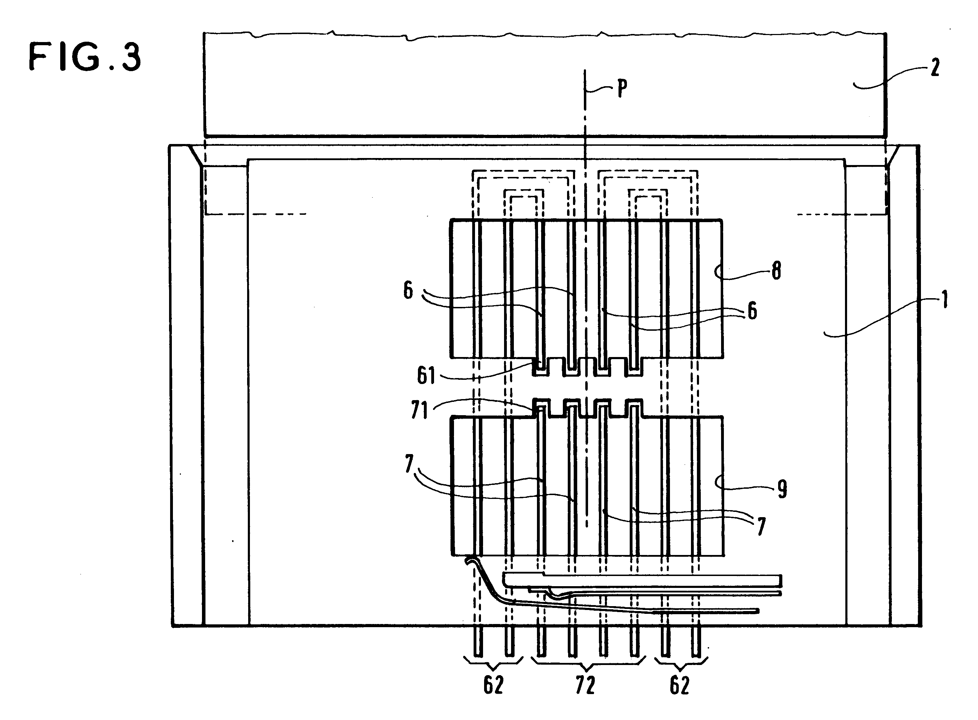

Ce nouvel agencement va maintenant être décrit en regard de la figure 3 qui représente en vue de dessous le cadre de contact conforme à l'invention.

Ce cadre de contact 1 comporte de façon classique une plaque de matière plastique isolante plus ou moins ajourée et comportant en particulier deux fenêtres 8, 9 où sont disposées en vis-à-vis les parties profilées de raccordement 61, 71 des ensembles de lames avant 6 et arrière 7.

Ces parties profilées 61, 71 viennent se loger dans des cavités ménagées dans le barreau de matière plastique séparant les deux fenêtres 8, 9.

Le cadre de contact 1 est également pourvu d'un contact de fin de course et d'une butée de fin de course, de façon connu.

L'objet de l'invention réside dans l'agencement des lames des ensembles avant et arrière 6 et 7. Selon l'exemple représenté, chaque ensemble de lames comporte quatre lames ; il est évidemment possible d'adapter l'agencement conforme à l'invention à un autre nombre de lames.

Les lames de l'ensemble arrière 7 sont, vues de dessous, droites et leurs parties d'extrémité profilées 71 sont disposées dans la fenêtre arrière 9. Leur autre extrémité fait saillie d'un barreau arrière délimitant cette fenêtre 9 et forment les branches de connexion 72 à la plaque de circuit imprimé. Leur partie intermédiaire est surmoulée dans ledit barreau.

Les lames de l'ensemble avant 6 sont disposées de façon analogue quant à leur partie profilée de raccordement 61 dans la fenêtre avant 8.

Elles se prolongent au-delà de cette partie profilée 61 de façon non droite, vues de dessous. Comme on peut le voir sur la figure, elles ont une forme de Γ, la branche la plus courte formant lesdites parties profilées 61. Elles sont donc prolongées par une partie doublement coudée à angle droit puis par une partie droite qui est adjacente et parallèle à leur partie profilée 61 puis adjacente et parallèle aux lames de l'ensemble arrière 7, pour venir former les broches de connexion 62 adjacentes aux broches de connexion 72 de l'ensemble arrière 7.

A ce niveau, toutes les broches de connexion 62, 72 sont repliées vers le haut en vue de dessous, pour être orientées vers le bas une fois l'assemblage de connecteur effectué (figure 2).

A part les parties profilées de raccordement 61 et les broches de connexion 62, les lames de l'ensemble avant 6 peuvent être totalement surmoulées. Dans ce cas non représenté, les fenêtres 8, 9 sont plus étroites, leur largeur ne correspondant qu'à l'encombrement en largeur des parties profilées 61, 71.

Selon l'agencement préféré et représenté, les lames de l'ensemble avant 6 ne sont surmoulées que dans le barreau avant définissant la fenêtre avant 8, dans le barreau délimitant les fenêtres avant et arrière 8, 9 et dans le barreau arrière définissant la fenêtre arrière 9.

Pour des raisons d'encombrement en largeur dans le barreau avant définissant la fenêtre avant 8, les lames de l'ensemble avant 6 les plus à droite sont prolongées vers la droite et les lames les plus à gauche sont prolongées vers la gauche. En d'autres termes, les lames en Γ sont symétriques par rapport à un axe central de symétrie P-P traversant les deux fenêtres 8 et 9.

Les ensembles de lames avant et arrière sont réalisés par découpage en une seule pièce dans une bande de métal. Pour assurer leur tenue réciproque une ou deux rives de maintien sont aménagées transversalement aux lames, ces rives étant découpées après le surmoulage dans la plaque de matière plastique isolante du cadre de contact.

Eventuellement, grâce à l'agencement du cadre de contact, il est possible de mettre en place sur la face avant du connecteur obtenu un dispositif de décharge électrostatique, afin de supprimer toute décharge provoquée par l'électricité statique se trouvant éventuellement sur la carte à puce. Ce dispositif peut être constitué d'un revêtement conducteur déposé sur une portion de la face avant du cadre de contact et relié à la masse.

**Revendications**

1. Cadre de contact pour lecteur de carte à puce comprenant notamment un cadre en matière isolante, pourvu d'au moins deux fenêtres, ainsi que des éléments de contact, ces éléments de contact étant constitués de deux ensembles de lames, un ensemble dit avant destiné à être disposé du côté de la fente d'insertion de la carte à puce et un ensemble dit arrière disposé de l'autre côté du cadre, les lames de chaque ensemble étant parallèles, profilées à l'une de leurs extrémités et faisant saillie vers le bas au-dessous de la surface du plan du cadre pour assurer le raccordement électrique avec des plages conductrices de la carte à puce, ces extrémités profilées de chaque ensemble étant disposées respectivement dans une fenêtre en vis-à-vis, l'autre extrémité des lames étant destinées à former des broches de connexion destinées à être reliées à une plaque de circuit imprimé associée au cadre, les lames de l'ensemble arrière étant surmoulées dans un barreau arrière délimitant la fenêtre arrière, leur extrémité formant broche de connexion faisant saillie de ce barreau, et les lames de l'ensemble avant étant surmoulées au moins dans un barreau avant délimitant la fenêtre avant, cadre caractérisé en ce que les lames de l'ensemble (6) avant ont leur extrémité formant broche de connexion (62) faisant saillie à l'arrière du cadre en matière isolante dans la face latérale de celui-ci à proximité des broches de connexion (72) de l'ensemble arrière (7), toutes les broches de connexion (62, 72) se trouvant sensiblement dans un même plan.

2. Cadre selon la revendication 1, caractérisé en ce que les lames de l'ensemble avant (6) sont, vues perpendiculairement au plan du cadre, découpées selon une forme de Γ dont la branche la plus courte constitue les parties profilées de raccordement électrique (61) et dont la branche la plus longue est disposée parallèlement aux lames de l'ensemble arrière (7).

3. Cadre selon la revendication 1 ou 2, caractérisé en ce que les broches de connexion de l'ensemble avant (62) et de l'ensemble arrière (72) sont repliées de façon identique vers le bas.

4. Cadre selon la revendication 1, caractérisé en ce que les lames de l'ensemble avant (6) sont surmoulées dans un barreau central séparant les fenêtres avant (8) et arrière (9).

5. Cadre selon la revendication 2 ou 4, caractérisé en ce que les lames de l'ensemble avant (6) sont surmoulées dans un barreau arrière délimitant la fenêtre arrière (9).

6. Cadre selon la revendication 2, caractérisé en ce que les lames de l'ensemble avant (6) sont symétriques par rapport à un axe central PP traversant les deux fenêtres (8) et (9).

7. Cadre selon l'une quelconque des revendications précédentes, caractérisé en ce qu'il comporte sur sa face avant un revêtement conducteur relié à la masse.

8. Procédé de fabrication d'un cadre selon l'une quelconque des revendications précédentes, caractérisé en ce que les ensembles de lames avant et arrière sont réalisés par découpage en une seule pièce dans une bande de métal.

# FIG.1

# FIG.2

FIG.3

EP 0 482 548 A1

**Office européen des brevets**

# RAPPORT DE RECHERCHE EUROPEENNE

Numéro de la demande

**EP 91 11 7914**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,D | EP-A-0 213 041   (DAIICHI DENSHI KOGYO)<br>* Figures 10-13; page 14, ligne 6 - page 16, ligne 18 * | 1,3 | G 06 K 7/06 |
| A | | 6,7,8 | |
| | – – – | | |
| Y | EP-A-0 274 288   (SCHLUMBERGER)<br>* Figures 2-4; colonne 3, ligne 28 - colonne 4, ligne 54 * | 1,3 | |
| A | | 8 | |
| | – – – | | |
| A | FR-A-2 554 977   (SOCIETE DE CONSTRUCTION)<br>* En entier * | 1,2 | |
| | – – – | | |
| A | FR-A-2 592 193   (MICHOT)<br>* Figures 3,4; page 6, ligne 7 - page 7, ligne 35 * | 1,2,8 | |
| | – – – – – | | |

| DOMAINES TECHNIQUES RECHERCHES (Int. Cl.5) |
|---|
| G 06 K |

Le présent rapport de recherche a été établi pour toutes les revendications

| Lieu de la recherche | Date d'achèvement de la recherche | Examinateur |
|---|---|---|
| La Haye | 19 décembre 91 | FORLEN G.A. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant